# EUROPÄISCHE PATENTANMELDUNG

(11) **EP 2 559 489 A1**
(43) Veröffentlichungstag der Anmeldung: **20.02.2013**
(21) Anmeldenummer: 12186645.3
(22) Anmeldetag: 22.11.2011
(51) Int. Cl.: B01L 7/00, B01L 3/00, B01J 19/00, C12M 1/00, G01N 35/00, G05D 23/24

(54) **Mikrofluidisches System mit Temperierung und Verfahren zur Temperierung in einem mikrofluidischen System**

(30) Priorität: 24.11.2010 DE 102010061911
(62) Teilanmeldung aus: 11788123.5
(71) Anmelder: Fraunhofer-Gesellschaft zur Förderung der angewandten Forschung e.V., 80686 München (DE)
(72) Erfinder: Otto, Thomas, 09249 Taura, OT Köthensdorf (DE); Nestler, Jörg, 09126 Chemnitz (DE); Gessner, Thomas, 09113 Chemnitz (DE)
(74) Vertreter: Schenk, Markus

(57) **Zusammenfassung**

Die Erfindung betrifft ein mikrofluldisches System, bestehend aus oder mit mindestens einem Substrat mit Elektroden (1), mindestens einem Fluidikteil (20) mit mindestens einem mikrofluidischen Kanal (30), wobei sich zwischen dem Fluldikteil (20) und dem Substrat mit Elektroden (1) mindestens ein elektrisches Widerstandsbauelement befindet, das mit den Elektroden (2a) auf dem mindestens einem Substrat (1) derart verbunden ist, dass ein elektrischer Strom über die Leitbahnen (2a) durch das Widerstandsbauelement (10) fließen kann. Die Erfindung betrifft desweiteren ein solches System, bei dem das oder die Widerstandsbauelemente einen negativen Temperaturkoeffizienten aufweisen.

Die Erfindung betrifft darüber hinaus ein Verfahren zur Temperierung in einem mikrofluidischen System und zur In-Situ-Berücksichtigung der Wärmeableitung im mikrofluidischen System und in seiner Umgebung,

## Beschreibung

Mikrofluidische Systeme für bioanalytische Nachweise benötigen häufig eine Möglichkeit zur Temperierung der Flüssigkeiten im System. Beispielsweise werden für eine Hybridisierung Temperaturen im Bereich zwischen 40 und 70°C benötigt; für eine Polymerasekettenreaktion (PCR) Temperaturen zwischen 50 und 95°C.

Ein Ziel der hierin offenbarten technischen Lehre ist es, in ein mikrofluidisches System eine kostengünstige, integrierte Heizmöglichkeit zu integrieren. Dabei sollen sowohl preisgünstige Komponenten zum Einsatz kommen, als auch die bei einem mikrofluidischen System ohne Heizung zum Einsatz kommenden Komponenten möglichst beibehalten bzw. nur wenig verändert werden. Insbesondere mikrofluidische Systeme, welche für einen integrierten Antrieb bereits auf mit Elektroden versehene Substrate (z.B. eine Leiterplatte) zurückgreifen, besitzen hier alle benötigten Voraussetzungen.

Diese und/oder gegebenenfalls andere Aufgaben werden durch ein mikrofluidisches System gemäß Anspruch 1, ein Verfahren zum Einstellen einer erhöhten Temperatur bzw. ein Verfahren zur Temperaturerhöhung gemäß Anspruch 8 und durch ein Verfahren zur Herstellung eines mikrofluidischen Systems gemäß Anspruch 12 gelöst.

Entsprechend einem Ausführungsbeispiel schafft die Erfindung ein mikrofluidisches System, das zumindest ein Bauteil mit zumindest einer Bauteiloberfläche, eine Hohlraum-bildende Anordnung und ein Widerstandsbauelement umfasst. Die Hohlraum-bildende Anordnung ist angrenzend an die Bauteiloberfläche angeordnet und umfasst bzw. bildet einen Hohlraum zur Aufnahme eines Fluids. Das elektrische Widerstandsbauelement ist an der Bauteiloberfläche des zumindest einen Bauteils angeordnet und ausgebildet, mit einem elektrischen Strom beaufschlagt zu werden, so dass das elektrische Widerstandsbauelement das in dem Hohlraum befindliche Fluid erwärmt. Das elektrische Widerstandsbauelement weist einen elektrischen Widerstand mit negativem Temperaturkoeffizienten auf und ist konzipiert, auch als Temperatursensor zu fungieren.

Einige Ausführungsbeispiele basieren somit darauf, dass eine Temperaturerhöhung eines Fluids in einem Hohlraum durch ein elektrisches Widerstandselement ermöglicht wird, das ein Standardbauelement sein kein und auf wenig aufwändige Weise in das mikrofluidische System integriert werden kann. Die Anbringung des Widerstandsbauelements an der Oberfläche eines Bauteils, an die auch die Hohlraum-bildende Anordnung angrenzt, sorgt einerseits für eine relativ direkte Wärmeübertragung von dem elektrischen Widerstandsbauelement zu dem Kanal und ist andererseits fertigungstechnisch relativ leicht vorzunehmen. Das Layout oder die Anordnung von mehreren elektrischen Widerstandsbauelementen kann zum Beispiel flexibel an verschiedene Konfigurationen des mikrofluidischen Systems angepasst werden, indem die Bauteiloberfläche an den verschiedenen möglichen Stellen für elektrische Widerstandsbauelemente entweder mit einem elektrischen Widerstandsbauelement bestückt werden kann, oder die entsprechende Stelle freigelassen werden kann. Leiterbahnen oder sonstige elektrische Anschlüsse, die zur Versorgung eine elektrischen Widerstandsbauelements herangezogen werden, können für eine Vielzahl möglicher Stellen für die elektrischen Widerstandsbauelemente in bzw. an dem Bauteil vorgesehen sein. Bei einer Konfektionierung eines endgültigen mikrofluidischen Systems können einige der möglichen und mit Leiterbahnen/elektrischen Anschlüssen versehen Stellen mit Widerstandsbauelementen versehen werden, wohingegen andere Stellen typischerweise frei bleiben (also nicht mit elektrischen Widerstandselement bestückt werden) und daher auch keine Heizwirkung entfalten. Im Gegensatz dazu ist es bei Widerstandselementen, die in das Bauteil oder die Hohlraum-bildende Anordnung integriert sind, typischerweise erforderlich, bei der Herstellung des Bauteils die jeweils benötigten Widerstandsbauelemente vorzusehen und mit elektrischen Verbindungen zu versehen, wodurch das Bauteil bzw. die Hohlraum-bildende Anordnung nicht mehr vielseitig einsetzbar ist, sondern spezielle Strukturen aufweisen je nachdem, welche Struktur für das mikrofluidische System gewünscht ist. Bei einigen Ausführungsbeispielen weist das elektrische Widerstandsbauelement einen elektrischen Widerstand mit negativem Temperaturkoeffizienten (engl.: "negative temperature coefficient", NTC) auf. NTC-Widerstände, die auch Heißleiter genannt werden, sind elektrische Widerstände mit einem negativem Temperaturkoeffizienten, das heißt, dass sie bei hohen Temperaturen Strom besser leiten als bei tiefen Temperaturen. Optional kann in Verbindung mit einer optionalen geeigneten elektrischen Schaltung zur Versorgung des elektrischen Widerstandsbauelements eine Regelung der in dem elektrischen Widerstandsbauelement umgesetzten Leistung erreicht werden.

Bei einigen Ausführungsbeispielen kann die Hohlraum-bildende Anordnung einen Abschnitt umfassen, der den Hohlraum von der Bauteiloberfläche separiert. Auf diese Weise ist das elektrische Widerstandsbauelement nicht direkt innerhalb des Hohlraums angeordnet und somit nicht dem in dem Hohlraum befindlichen Fluid ausgesetzt. Da die Hohlraum-bildende Anordnung mitsamt dem separierenden Abschnitt an die Bauteiloberfläche angrenzt, können das Bauteil mit dem elektrischen Widerstandsbauelement und die Hohlraum-bildende Struktur jeweils vorgefertigt werden und durch Aneinanderfügen an der Bauteiloberfläche zu dem mikrofluidischen System zusammengesetzt werden.

Der den Hohlraum von der Bauteiloberfläche und dem elektrischen Widerstandsbauelement separierende Abschnitt kann an einer der Bauteiloberfläche zugewandten Seite eine Aussparung aufweisen, die zur Aufnahme des elektrischen Widerstandsbauelements konfiguriert ist. Somit kann die Hohlraum-bildende Anordnung typischerweise relativ dicht und ohne größere mechanische Spannungen, die durch das elektrische Widerstandsbauelement verursacht werden könnten, an der Bauteiloberfläche angeordnet werden. Desweiteren kann sich in der Aufnahme zumindest teilweise ein Material befinden, das eine höhere Wärmeleitfähigkeit als Luft besitzt, wodurch eine gute Wärmeübertragung von dem elektrischen Widerstandsbauelement auf die Hohlraum-bildende Anordnung sowie auf den Hohlraum und das darin enthaltene Fluid erreicht werden kann.

Die Hohlraum-bildende Anordnung kann ein Bodenelement, ein Deckelelement und ein zwischen dem Bodenelement und dem Deckelelement angeordnetes Hohlraum-strukturierendes Element umfassen. Das Bodenelement kann an der Bauteiloberfläche des Bauteils angeordnet sein. Der Hohlraum wird bei dieser Gestaltung der Hohlraum-bildenden Anordnung typischerweise von dem Bodenelement, dem Deckelelement und dem Hohlraum-strukturierenden Element begrenzt. Das Hohlraum-strukturierende Element kann insbesondere ausgebildet sein, den Hohlraum lateral, d.h. in der/den Richtung(en) parallel zu der Bauteiloberfläche zu begrenzen, und/oder auf diese Weise Seitenwände für den Hohlraum bzw. einen Kanal für das Fluid zu bilden. Insbesondere kann das Hohlraum-strukturierende Element ein strukturiertes Klebeband sein. Das Bodenelement, das Deckelelement und das Hohlraum-strukturierende Element können eine Schichtanordnung bilden.

Das elektrische Widerstandsbauelement kann ein Bauelement für die Oberflächenmontage (surface mount device, SMD) sein. Das mikrofluidisches System kann weiterhin eine oder mehrere elektrische Leiterbahn(en) umfassen, die zumindest teilweise an der Bauteiloberfläche angeordnet ist/sind und ausgebildet ist/sind, den elektrischen Strom für das elektrische Widerstandsbauelement zu leiten.

Neben der Möglichkeit, das Fluid in dem Hohlraum mittels des elektrischen Widerstandsbauelements zu erhöhen, kann weiter ein elektrolytischer, fluidischer Aktor vorgesehen sein, der ausgebildet ist, auf das Fluid in dem Hohlraum einzuwirken. Die Einwirkung erfolgt dabei typischerweise durch eine Druckänderung, die von dem elektrolytischen, fluidischen Aktor erzeugt wird.

Bei einigen Ausführungsbeispielen kann eine elektrische Stromquelleschaltung vorgesehen sein, die ausgebildet ist, das elektrische Widerstandsbauelement mit dem elektrischen Strom zu versorgen. Insbesondere in Verbindung mit einem negativem Temperaturkoeffizienten, den das elektrische Widerstandsbauelement gegebenenfalls aufweist, lässt sich durch den von der Stromquellenschaltung im Wesentlichen zumindest zeitabschnittsweise konstant gehaltene Strom eine Leistungsregelung der in dem elektrischen Widerstandsbauelement umgesetzten Wärmeleistung erzielen.

Das mikrofluidische System kann ferner ein Widerstandsmessvorrichtung zum Messen eines Widerstands des elektrischen Widerstandsbauelements umfassen.

Weitere Ausführungsbeispielen stellen ein Verfahren zum Einstellen bzw. Erzielen einer erhöhten Temperatur in zumindest einem Teil eines mikrofluidischen Kanals in einem mikrofluidischen System, das zumindest ein Bauteil mit zumindest einer Bauteiloberfläche, eine Hohlraum-bildende Anordnung, und ein elektrisches Widerstandsbauelement umfasst. Die Hohlraum-bildende Anordnung ist angrenzend an die Bauteiloberfläche angeordnet und umfasst bzw. begrenzt einen Hohlraum zur Aufnahme eines Fluids. Das elektrische Widerstandsbauelement ist an der Bauteiloberfläche des zumindest einen Bauteils angeordnet und ausgebildet, mit einem elektrischen Strom beaufschlagt zu werden, so dass das elektrische Widerstandsbauelement das in dem Hohlraum befindliche Fluid erwärmt. Das Verfahren zum Einstellen bzw. Erzielen der erhöhten Temperatur umfasst ein Zuführen eines elektrischen Stroms zu dem elektrischen Widerstandsbauelement, welches durch den elektrischen Strom erwärmt wird. Das Verfahren umfasst weiterhin ein Messen einer über dem Widerstandsbauelement oder über den Widerstandsbauelementen abfallenden Spannung. Das Verfahren umfasst auch das Bestimmen einer tatsächlichen Temperatur in dem mikrofluidischen Kanal auf der Basis der gemessenen Spannung.

Weitere Ausführungsbeispiele stellen ein Verfahren zur Herstellung eines mikrofluidischen Systems bereit. Das Verfahren umfasst ein Bereitstellen eines Bauteils mit einer Bauteiloberfläche, ein Bereitstellen zumindest eines Widerstandsbauelements in dem Bauteil oder an der Bauteiloberfläche und ein Anordnen einer Hohlraum-bildenden Anordnung an der Bauteiloberfläche. Dabei weist das elektrische Widerstandsbauelement einen elektrischen Widerstand mit negativem Temperaturkoeffizienten auf und ist konzipiert, als Heizelement und als Temperatursensor zu fungieren. Während eines Betrieb des mikrofluidischen Systems kann dann ein von der Hohlraum-bildenden Anordnung gebildeter bzw. begrenzter Hohlraum von dem zumindest einen Widerstandselement erwärmt werden.

Ausführungsbeispiele der Erfindung werden nachfolgend bezugnehmend auf die beiliegenden Zeichnungen näher erläutert. Es zeigen:
Fig. 1 eine schematische Querschnittsansicht durch ein mikrofluidisches System gemäß zumindest einem Ausführungsbeispiel der hierin offenbarten technischen Lehre;
Fig. 2 eine schematische Querschnittsansicht durch ein mikrofluidisches System gemäß zumindest einem weiteren Ausführungsbeispiel der hierein offenbarten technischen Lehre;
Fig. 3 eine schematische Querschnittsansicht durch ein mikrofluidisches System gemäß zumindest einem weiteren Ausführungsbeispiel der hierein offenbarten technischen Lehre;
Fig. 4 ein schematisches elektrisches Schaltbild von elektrischen Bauteilen eines mikrofluidischen Systems gemäß zumindest einem Ausführungsbeispiel der hierin offenbarten technischen Lehre;
Fig. 5 in schematischer Weise einen zeitlichen Stromverlauf eines elektrischen Stroms zur Versorgung eines elektrischen Widerstandsbauelements in einem mikrofluidischen System gemäß der hierin offenbarten technischen Lehre;
Fig. 6 ein schematisches elektrisches Schaltbild von elektrischen Bauteilen eines mikrofluidischen Systems gemäß zumindest einem weiteren Ausführungsbeispiel der hierin offenbarten technischen Lehre;
Fig. 7A bis 7C in schematischer Weise verschiedene zeitliche Signalverläufe von in dem mikrofluidischen System auftretenden physikalischen Größen;
Fig. 8 ein schematisches Flussdiagramm eines Verfahrens zum Einstellen bzw. Erzielen einer erhöhten Temperatur in einem Kanal bzw. Hohlraum eines mikrofluidischen Systems gemäß zumindest einem Ausführungsbeispiel der offenbarten technischen Lehre;
Fig. 9 ein schematisches Flussdiagramm eines Verfahrens zum Einstellen bzw. Erzielen einer erhöhten Temperatur in einem Kanal bzw. Hohlraum eines mikrofluidischen Systems gemäß zumindest einem Ausführungsbeispiel der offenbarten technischen Lehre;
Fig. 10 ein schematisches Flussdiagramm eines Verfahrens zum Einstellen bzw. Erzielen einer erhöhten Temperatur in einem Kanal bzw. Hohlraum eines mikrofluidischen Systems gemäß zumindest einem Ausführungsbeispiel der offenbarten technischen Lehre; und
Fig. 11 ein schematisches Flussdiagramm eines Verfahrens zur Herstellung eines mikrofluidischen Systems gemäß zumindest einem Ausführungsbeispiel der offenbarten technischen Lehre.

Bevor nachfolgend Ausführungsbeispiele der vorliegenden Erfindung im Detail anhand der Zeichnungen näher erläutert werden, wird darauf hingewiesen, dass identische, funktionsgleiche oder gleich wirkende Elemente und Strukturen in den unterschiedlichen Figuren mit den gleichen Bezugszeichen versehen sind, so dass die bei den unterschiedlichen Ausführungsbeispielen dargestellte Beschreibung der mit gleichen Bezugszeichen versehenen Elemente und Strukturen untereinander austauschbar ist bzw. aufeinander angewendet werden kann.

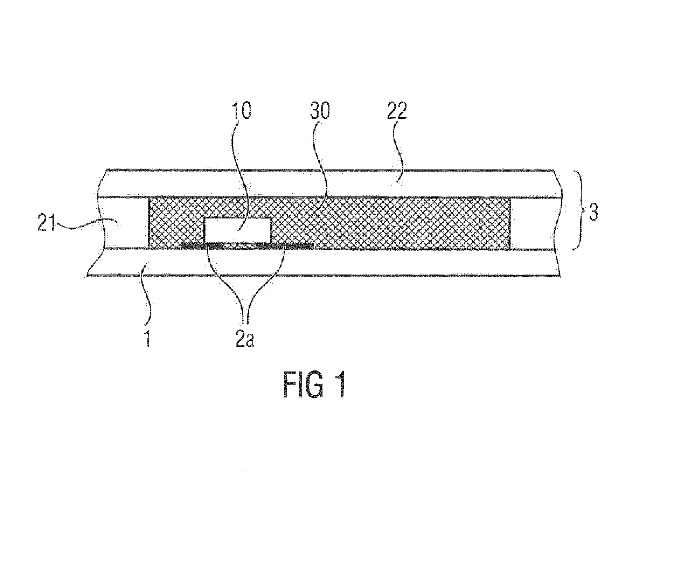

Fig. 1 zeigt schematisch eine Querschnittsansicht eines mikrofluidischen Systems gemäß zumindest einem Ausführungsbeispiels der hierin offenbarten technischen Lehre. Das mikrofluidische System umfasst ein Bauteil bzw. ein Elektrodensubstrat (z.B. Leiterplatte) 1 und eine Hohlraum-bildende Anordnung 3. Die Hohlraum-bildende Anordnung 3 ist an einer Bauteiloberfläche des Bauteils 1 angeordnet. Ein Hohlraum bzw. Kanal bzw. Mikrofluidkanal 30 wird an von der Bauteiloberfläche des Bauteils 1 und von der Hohlraum-bildenden Anordnung 3 begrenzt. Die Hohlraum-bildende Anordnung 3 umfasst ein Hohlraum-strukturierendes Element 21, welches die Seitenwände des Hohlraums bzw. Kanals 30 bildet, und ein Deckelelement bzw. einen Kanaldeckel oder Sensor 22. Das Hohlraum-strukturierende Element 21 begrenzt den Hohlraum 30 in seitlicher Richtung.

Zumindest ein Teil des Hohlraums 30 dient auch als Aussparung für ein elektrisches Widerstandsbauelement 10, das an der Bauteiloberfläche des Bauteils 1 angeordnet ist. Somit fallen bei dem in Fig. 1 gezeigten Ausführungsbeispiel der Hohlraum 30 und die Aussparung für das elektrische Widerstandsbauelement 10 zusammen. Bei anderen Ausführungsbeispielen, die nachfolgend beschrieben werden, sind der Hohlraum 30 und die Aussparung für das elektrische Widerstandsbauelement getrennt voneinander. Das elektrische Widerstandsbauelement 10 ist konfiguriert, das in dem Hohlraum 30 befindliche Fluid zu erwärmen, wenn das elektrische Widerstandsbauelement von einem elektrischen Strom durchflossen wird. Zu diesem Zweck ist das elektrische Widerstandsbauelement 10 an zwei Elektroden 2a angeschlossen, die zum Beispiel in Form eines Teils von Leiterbahnen auf der Bauteiloberfläche des Bauteils 1 ausgeführt sein können.

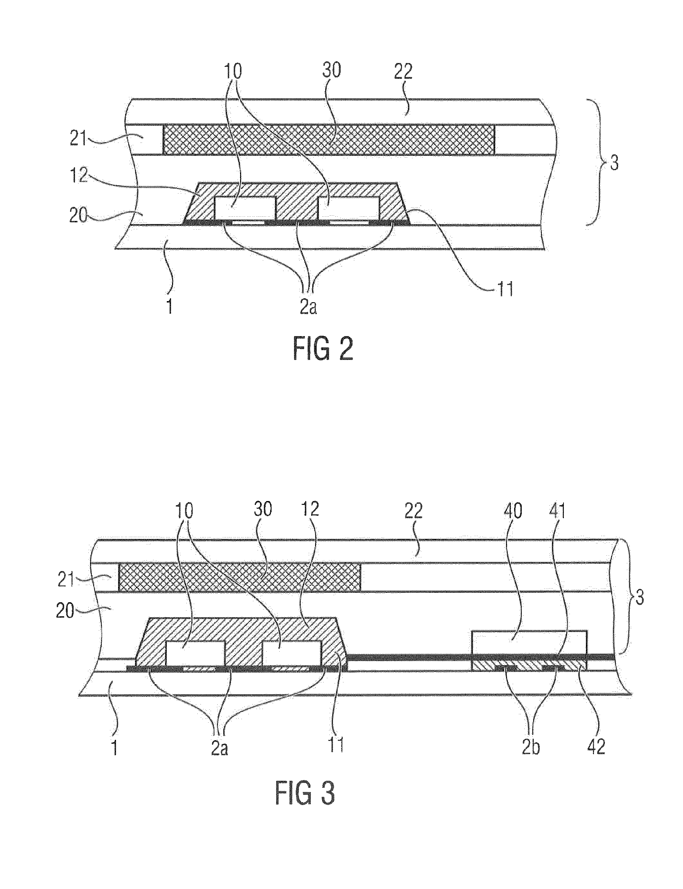

Fig. 2 zeigt in schematischer Weise einen Ausschnitt aus einem Mikrofluidiksystem (Querschnitt) gemäß zumindest eines weiteren Ausführungsbeispiels zur Verdeutlichung des Prinzipaufbaus der erfindungsgemäßen Temperierung.

Gemäß zumindest einigen Ausführungsbeispielen der offenbarten technischen Lehre werden in ein mikrofluidisches System, welches gleichzeitig ein Elektrodensubstrat 1 besitzt, Heizelemente 10 vorzugsweise in Form von elektrischen Widerständen mit negativen Temperaturkoeffizienten (NTC) aufgebracht. Diese Widerstände 10 sind eigentlich als Temperatursensor konzipiert, eignen sich jedoch auch zum Heizen. Die Eigenschaft, gleichzeitig als Temperatursensor zu fungieren, ist hier vorteilhaft, da so auch eine Temperaturüberwachung möglich ist. Ist das Elektrodensubstrat 1 eine Leiterplatte, so können die (NTC-)Widerstände 10 beispielsweise mittels Löten oder Leitkleben kontaktiert und befestigt werden. In einer Ausführungsform der Erfindung werden die (NTC-)Widerstände 10 als Surface Mount Devices (SMD) ausgeführt sein, typischerweise mit Baugrößen von 0805 (ca. 2mm x 1,2mm), 0603 (ca. 1,6mm x 0,8mm) oder 0402 (ca. 1,0mm x 0,5mm). Da häufig im mikrofluidischen System Flächen von vielen Quadratmillimetern geheizt werden müssen, kann es vorteilhaft sein, mehrere NTC-Widerstände 10 in großer örtlicher Nähe gleichzeitig zu verwenden. Da i. A. eine gleichmäßige, d.h. homogene Verteilung der Temperatur in einem Bereich eines Mikrofluidikteils erwünscht sein wird, kann es vorteilhaft sein, den Raum zwischen NTC-Widerständen und Mikrofluidikteil mit einem Material mit guter Wärmeleitfähgikeit 12 zu versehen. In einer Ausführungsform der Erfindung kann hier z.B. Wärmeleitpaste eingesetzt werden.

Ein Vorteil der Nutzung von NTC-Widerständen besteht darin, dass sie bei erhöhter Temperatur ihren elektrischen Widerstand verringern. Dies erlaubt es, bei einem Betrieb mit Stromquellen eine Selbstlimitierung zu erreichen, was den erforderlichen Regel-/Steueraufwand verringert. Dieser Effekt ist darauf zurückzuführen, dass die Verlustleistung P, die in Wärme umgesetzt wird, aufgrund von P=R*I² (R=Widerstand, I=Strom) mit fallendem Widerstand (also bei steigender Temperatur) relativ zum Quadrat des Stromes geringer wird.

Beim Betrieb mit Stromquellen (anstatt Spannungsquellen) kann entweder jeder NTC-Widerstand mit einer eigenen Stromquelle, oder aber mehrere NTC-Widerstände in Reihe betrieben werden.

In einer besonders vorteilhaften Ausführungsform der Erfindung liegt der Widerstand des oder der NTC-Bauelemente bei einer Temperatur von 20°C unter 6 kOhm und wird einem Strom von kleiner oder gleich 30mA betrieben.

Wird mindestens eines der Widerstandsbauelemente 10 mit einem Strom betrieben, der zu einer Erwärmung des Widerstandsbauelementes und bei ausreichend langer Zeit auch seiner Umgebung führt, so kann nach Ausschalten des erwärmenden Stromes über eine Widerstandsmessung am Widerstandsbauelement 10 der zeitliche Verlauf der Abkühlung des umgebenden Systems ermittelt werden. Für die Widerstandsmessung kann die Stromquelle so eingesetzt werden, dass sie nur einen geringen Strom liefert, der nicht oder nur unwesentlich zur Eigenerwärmung des Widerstandsbauelements führt und gleichzeitig die über dem Widerstandsbauelement abfallende Spannung gemessen werden. Dabei wird ausgenutzt, dass insbesondere NTC Widerstände aufgrund ihrer Bauelementcharakteristischen Widerstands-Temperaturkennlinie als Temperatursensoren eingesetzt werden können; und vor allem bei ihrer Volumenausdehnung gegenüber dem umgebenden restlichen mikrofluidischen System bei kleinen Widerstandsbauelementen (z.B. in SMD-Bauformen) eine vernachlässigbare Wärmekapazität besitzen.

Aus der Abklingfunktion der Temperatur kann schließlich die Charakteristik des umgebenden Systems ermittelt werden, so dass der für die Einstellung einer bestimmten Temperatur an einer bestimmten Stelle im mikrofluidischen System (z.B. im Kanal 30) notwendige Strom angepasst werden kann.

Sowohl für die Erwärmung, als auch für die Messung kann entweder ein konstanter Strom, oder ein zwischen einem Maximalwert und einem Minimalwert pulsierender Strom genutzt werden, wobei der Minimalwert auch Null sein kann. Ist er zumindest zeitweise nicht Null, so kann in diesen "Heizpausen" auch die oben beschriebenen Messung der Charakteristik des umgebenden Systems erfolgen. Für die Messung des Widerstandes ist die Stromquelle mit einer Funktionalität zum Messen der Spannung über dem Widerstand ausgestattet.

Vorteilhaft ist der Betrieb mit einer Stromquelle auch und vor allem dann, wenn im mikrofluidischen System auch für andere Anwendungen Stromquellenschaltungen benötigt werden (z.B. für Pumpen oder Ventile, die auf Basis der Elektrolyse arbeiten, da dieser Prozess eine Gasgeneration hervorruft, die proportional zu den geflossenen Ladungen ist). Auf diese Weise reduziert sich der erforderliche Schaltungsaufwand, da dieselbe Steuerung für den Betrieb der Pumpen/Ventile UND der Heizer dienen kann.

Fig. 3 zeigt auf schematische Weise einen Ausschnitt aus einem Mikrofluidiksystem (Querschnitt) zur Verdeutlichung des Prinzipaufbaus der erfindungsgemäßen Temperierung bei gleichzeitiger Möglichkeit zur Realisierung von elektrolytisch arbeitenden Pumpen oder Ventilen. In einer Ausführungsvariante der Erfindung, die in Fig. 3 gezeigt ist, befinden sich auf einem Elektrodensubstrat 1 (z.B. einer Leiterplatte) sowohl Elektroden 2b, die einen Elektrolyt kontaktieren, als auch Elektroden 2a zur Kontaktierung von (NTC-)Widerständen. Mit den Elektroden 2b, die den Elektrolyt kontaktieren, sind elektrolytisch arbeitende Pumpen realisiert, wie dies beispielsweise in der Patentschrift EP 1844936 beschrieben ist, die in der Lage sind, Flüssigkeiten durch ein Kanalsystem zu pumpen. Die vorliegende Erfindung ist vor allem daher in dieser Kombination vorteilhaft, da für die Elektrolysereaktoren und die Heizelemente das selbe Elektrodensubstrat 1, die selbe Aufbau- und Verbindungstechnik und ggf. sogar die selbe Ansteuerschaltung genutzt werden können.

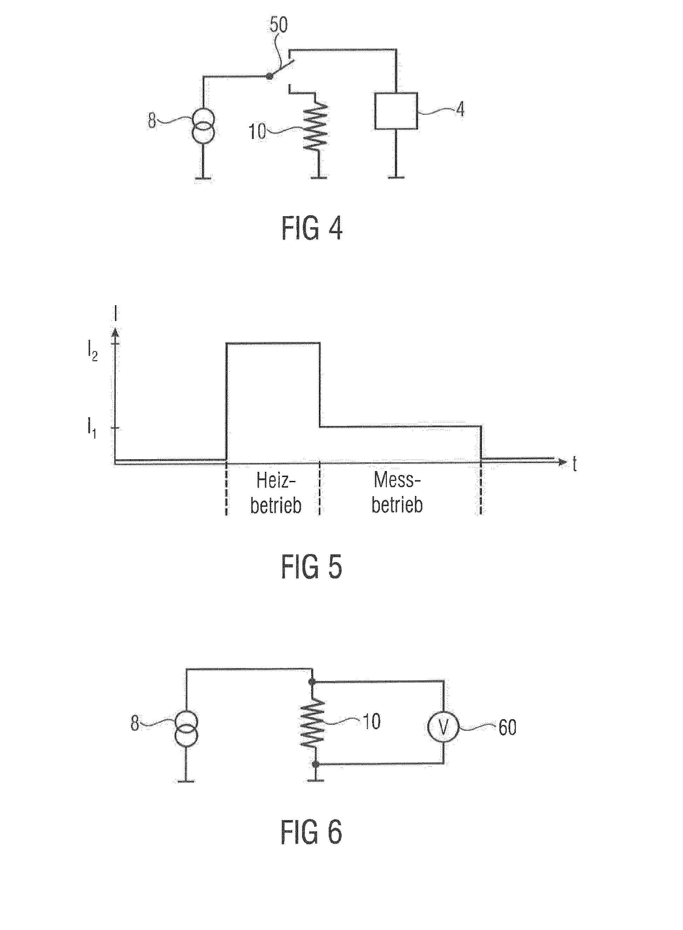

Fig. 4 zeigt ein schematisches elektrisches Schaltbild von elektrischen Bauteilen eines mikrofluidischen Systems gemäß zumindest einem Ausführungsbeispiel der hierin offenbarten technischen Lehre. Das elektrisches Widerstandsbauelement 10 ist über ein Schaltelement 50 an eine Stromquellenschaltung 8 angeschlossen. Die Stromquellenschaltung 8 ist konfiguriert, einen im Wesentlichen konstanten Strom zu liefern, der weitgehend unabhängig von einer elektrischen Last (hier das elektrische Widerstandselement 10 oder ein fluidischer, elektrolytischer Aktor 4) ist, die an die Stromquellenschaltung 8 angeschlossen ist. Das Schaltelement 50 ist konfiguriert, die Stromquellenschaltung 8 selektiv und/oder abwechselnd mit dem elektrischen Widerstandsbauelement 10 bzw. dem elektrolytischen Aktor 4 zu verbinden. Auf diese Weise wird nur eine Stromquellenschaltung 8 benötigt. Typischerweise wird der elektrolytische Aktor nur kurzzeitig betätigt und eine derartige kurzzeitige Unterbrechung der Versorgung des elektrischen Widerstandsbauelements mit elektrischem Strom beeinflusst die Temperierung des in dem Hohlraum 30 befindlichen Fluids nur unwesentlich. Weiterhin kann die Versorgung des elektrischen Widerstandsbauelements 10 ohnehin einem gepulsten oder getakteten Schema ähnlich einer Pulsweitenmodulation (PWM) folgen, so dass der elektrolytische Aktor 4 zum Beispiel während der Pulspausen des elektrischen Widerstandselements 10 über das Schaltelement 50 mit der Stromquellenschaltung 8 verbunden sein kann.

Fig. 5 zeigt in schematischer Weise einen zeitlichen Stromverlauf eines elektrischen Stroms zur Versorgung eines elektrischen Widerstandsbauelements in einem mikrofluidischen System gemäß der hierin offenbarten technischen Lehre. Bei dem in Fig. 5 dargestellten Beispiel kann der elektrische Strom drei verschiedene Stromstärken annehmen, nämlich einmal die Stromstärke 0 ("Null"), eine erste Stromstärke I₁ und eine zweite Stromstärke I₂. Die zweite Stromstärke I₂ ist höher als die erste Stromstärke I₁ und wird während eines Heizbetriebs des elektrischen Widerstandsbauelements verwendet. Die erste Stromstärke I₁ wird dagegen während eines Messbetriebs verwendet. Die erste Stromstärke I₁ kann eine Minimalstromstärke sein, während die zweite Stromstärke I₂ eine Maximalstromstärke sein kann. Ein Wechsel zwischen der ersten Stromstärke I₁ und der zweiten Stromstärke I₂ mit einem möglicherweise variablen Tastverhältnis kann auch verwendet werden, um eine in dem elektrischen Widerstandsbauelement umgesetzte mittlere Leistung einzustellen bzw. zu regeln. Auf diese Weise kann die Temperatur des elektrischen Widerstandsbauelements eingestellt werden, was wiederum eine Einstellung der Temperatur des Fluids erlaubt. Die erste Stromstärke I₁ kann gleich oder ungleich Null sein. Wenn I₁ ungleich Null ist (so wie in Fig. 5 dargestellt), kann die über dem elektrischen Widerstandsbauelement abfallende Spannung gemessen werden, ohne dass eine signifikante Temperaturerhöhung des elektrischen Widerstandsbauelements stattfindet, da die erste Stromstärke I₁ relativ niedrig ist.

Fig. 6 zeigt ein schematisches elektrisches Schaltbild von elektrischen Bauteilen eines mikrofluidischen Systems gemäß zumindest einem weiteren Ausführungsbeispiel der hierin offenbarten technischen Lehre. Das elektrische Widerstandselement 10 wird von der Stromquellenschaltung 8 mit elektrischem Strom versorgt. Eine Widerstandsmessvorrichtung 60 ist elektrisch parallel zu dem elektrischen Widerstandsbauelement 10 geschaltet. Als Beispiel ist die Widerstandsmessvorrichtung 60 in Fig. 6 als Spannungsmesser dargestellt. Mittels der Widerstandsmessvorrichtung 60 kann z.B. die Spannung gemessen werden, die über dem elektrischen Widerstandsbauelement abfällt. Bei Kenntnis der Stromstärke, die von der Stromquellenschaltung 8 geliefert wird, kann auf diese Weise der aktuelle Widerstandswert des elektrischen Widerstandsbauelements 10 ermittelt werden.

Aus einer bekannten Temperaturabhängigkeit des elektrischen Widerstandsbauelements 10 kann anhand des aktuellen Widerstandswerts eine aktuelle Temperatur des elektrischen Widerstandsbauelements 10 bestimmt werden.

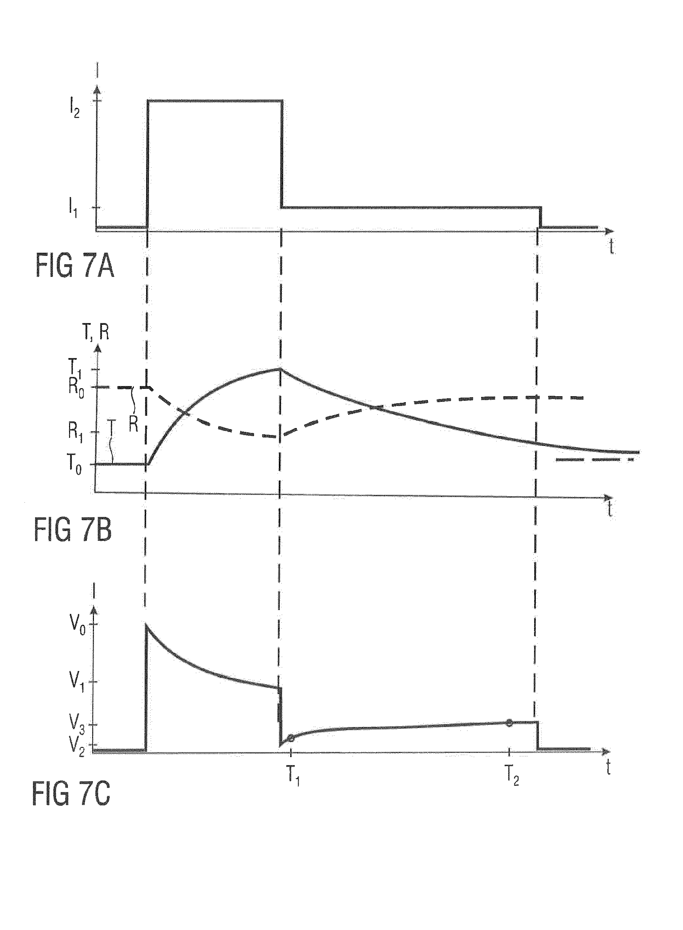

Fig. 7A bis 7C zeigen in schematischer Weise verschiedene zeitliche Signalverläufe von physikalischen Größen, die in einem mikrofluidischen System gemäß zumindest einem Ausführungsbeispiel auftreten können, wenn ein abwechselnder Heiz-/Messbetrieb durchgeführt wird. Fig. 7A ist ähnlich zu Fig. 5 und zeigt einen zeitlichen Stromverlauf des elektrischen Stroms, der durch das elektrische Widerstandsbauelement 10 fließt. Während eines ersten Zeitintervalls ist die Stromstärke Null. Während eines zweiten Zeitintervalls ist die Stromstärke auf einem relativ hohen Wert I₂, der typischerweise für eine signifikante Erwärmung des Widerstandbauelements 10 sorgt. Das zweite Zeitintervall entspricht somit einem Heizbetrieb. Während eines dritten Zeitintervalls, welches einem Messbetrieb entspricht, ist die Stromstärke auf einem relativ niedrigen Wert I₁, der ungleich Null ist.

Fig. 7B zeigt die entsprechenden zeitlichen Verläufe für die Temperatur T des elektrischen Widerstandsbauelements 10 und für dessen elektrischen Widerstand R. Die Temperatur T steigt während des Heizbetriebs von einer anfänglichen Temperatur T₀ an bis auf eine Temperatur T₁. Aufgrund eines negativen Temperaturkoeffizienten des elektrischen Widerstandsbauelements 10 nimmt der Widerstands R während des Heizbetriebs von einem anfänglichen Wert R₀ bis zu einem niedrigeren Wert R₁ ab. Der Temperaturanstieg folgt im Wesentlichen einer exponentiellen Funktion, wobei jedoch zu beachten ist, dass der elektrische Widerstand R mit steigender Temperatur T abnimmt, was sich derart auswirkt, dass die in dem elektrischen Widerstand umgesetzte Leistung mit steigender Temperatur abnimmt und der exponentielle Anstieg somit verlangsamt wird. Der Widerstandswert R ist wiederum eine Funktion der Temperatur und hängt von dieser beispielsweise ebenfalls exponentiell ab.

Während des Messbetriebs sinkt die Temperatur im Wesentlichen exponentiell ab. Der im Messbetrieb fließende Strom der Stromstärke I₁ ist zu schwach, um die Temperatur des Widerstandsbauelements 10 auf der Temperatur T₁ zu halten. Anders ausgedrückt beeinflusst der geringe Strom I₁ die Temperatur des Widerstandsbauelements 10 in einer Weise, die im Wesentlichen vernachlässigbar ist. Da somit auch der temperaturabhängige Widerstandswert R nur eine vernachlässigbare Rolle spielt, ist der Temperaturabfall während des Messbetriebs tatsächlich im Wesentlich exponentiell und entspricht somit dem Temperaturverhalten eines dynamischen Systems bzw. Verzögerungsglied erster Ordnung (PT1-Glied).

Nach Beendigung des Messbetriebs wird der elektrische Strom bei dem in den Figuren 7A bis 7C gezeigten Ausführungsbeispiel zeitweilig abgeschaltet (siehe Fig. 7A). Wie zuvor erwähnt, ändert sich dadurch das Temperaturverhalten und das Widerstandsverhalten des elektrischen Widerstandsbauelements nur unwesentlich, sodass die während des Messbetriebs beobachtete, im Wesentlichen exponentielle Temperaturabnahme bzw. die im Wesentlichen exponentielle Widerstandszunahme auch nach Abschalten des Stroms I₁ fortgesetzt wird.

Fig. 7C zeigt eine elektrische Spannung, die an dem elektrischen Widerstandsbauelement 10 abfällt. Zu Beginn (d.h. vor dem Heizbetrieb) und zum Ende (d.h. nach dem Messbetrieb) des dargestellten Spannungsverlaufs fließt kein elektrischer Strom durch das Widerstandsbauelement 10, so dass auch keine elektrische Spannung an ihm abfällt. Während des Heizbetriebs hat der elektrische Strom den im Wesentlichen konstanten Wert I₂ und der Widerstandswert sinkt von R₀ auf R₁ ab. Dementsprechend sinkt die Spannung von einem Wert V₀ auf einen Wert V₁. Beim Umschalten in den Messbetrieb wird der elektrische Strom auf den Wert I₁ umgeschaltet, wodurch auch die Spannung sich entsprechend rasch auf einen neuen Wert V₂ < V₁ ändert. Da der Widerstand R während des Messbetriebs langsam wieder ansteigt, steigt auch die Spannung V wieder an, bis sie am Ende des Messbetriebs den Wert V₃ erreicht. Der momentane Widerstandswert kann zum Beispiel durch eine Widerstandsmessvorrichtung 60 gemessen werden. Dies kann zu zwei Zeitpunkten T₁ und T₂ geschehen, wie in Fig. 7C veranschaulicht. Aus dem Spannungsunterschied und der Dauer T₂-T₁ kann die Exponentialfunktion des Spannungsabfalls geschätzt werden, woraus sich über die Beziehung zwischen Temperatur und elektrischen Widerstandswert des Widerstandsbauelements 10 auf die Temperaturentwicklung des Widerstandsbauelements 10 schließen lässt. Daraus lässt sich das Wärmeverhalten des mikrofluidischen Systems abschätzen.

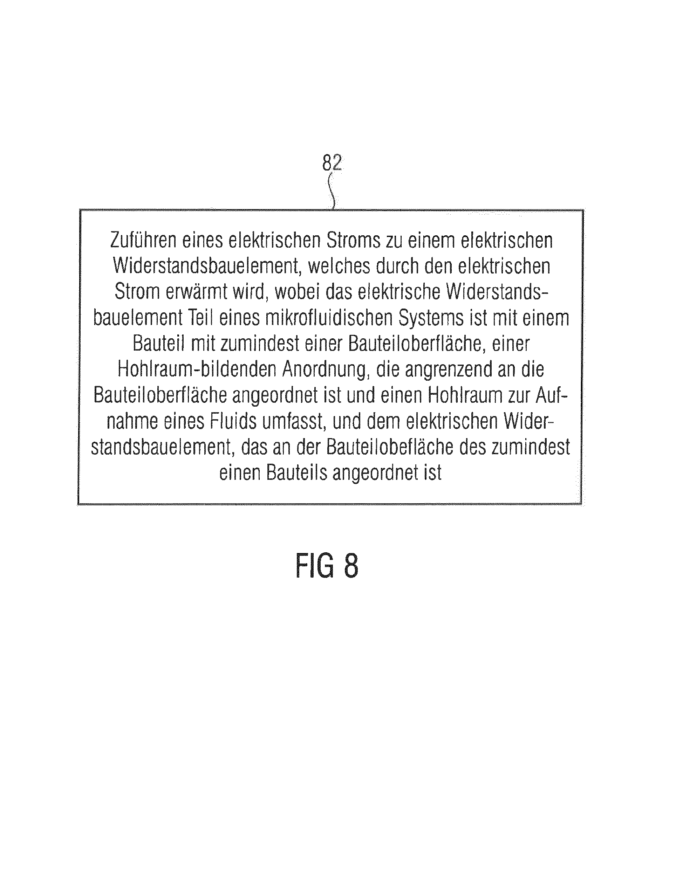

Fig. 8 zeigt ein schematisches Flussdiagramm eines Verfahrens zum Einstellen bzw. Erzielen einer erhöhten Temperatur in einem Kanal bzw. Hohlraum eines mikrofluidischen Systems gemäß zumindest einem Ausführungsbeispiel der offenbarten technischen Lehre. Während eines Schritts 82 des Verfahrens wird ein elektrischer Strom zu einem elektrischen Widerstandsbauelement zugeführt, welches durch den elektrischen Strom erwärmt wird. Das elektrische Widerstandsbauelement ist Teil eines mikrofluidischen Systems mit einem Bauteil mit zumindest einer Bauteiloberfläche, einer Hohlraum-bildenden Anordnung, die angrenzend an die Bauteiloberfläche angeordnet ist und einen Hohlraum zur Aufnahme eines Fluids umfasst, und dem elektrischen Widerstandsbauelement, das an der Bauteilobefläche des zumindest einen Bauteils angeordnet ist.

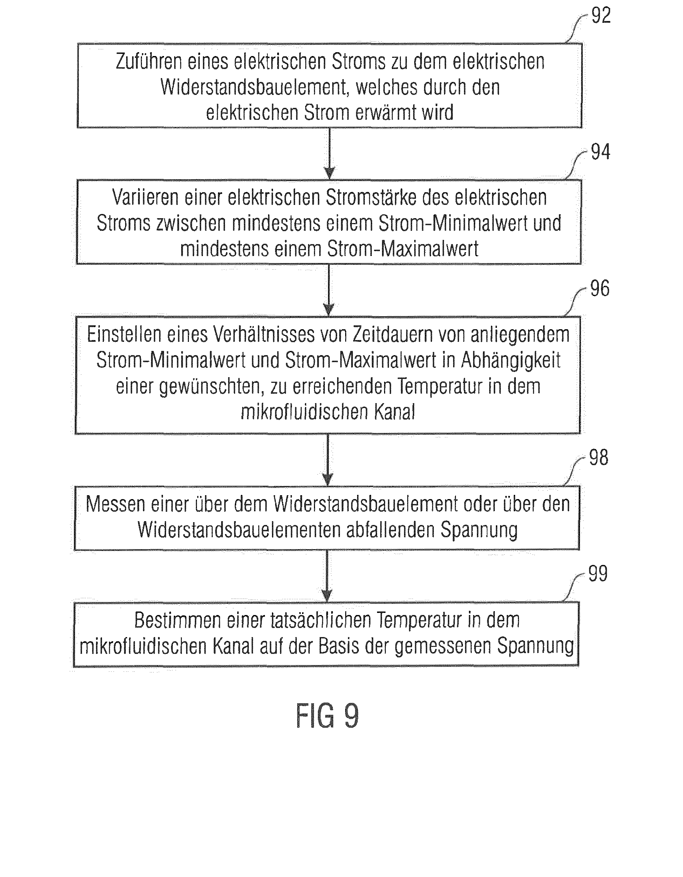

Fig. 9 ein schematisches Flussdiagramm eines Verfahrens zum Einstellen bzw. Erzielen einer erhöhten Temperatur in einem Kanal bzw. Hohlraum eines mikrofluidischen Systems gemäß zumindest einem Ausführungsbeispiel der offenbarten technischen Lehre. Während eines Schritts 92 wird dem elektrischen Widerstandsbauelement ein elektrischer Strom zugeführt. Das elektrische Widerstandsbauelement wird dadurch erwärmt. Dann wird eine elektrische Stromstärke des elektrischen Stroms variiert zwischen mindestens einem Strom-Minimalwert und mindestens einem Strom-Maximalwert, wie in Schritt 94 angedeutet. Während eines Schritts 96 wird das Verhältnis von Zeitdauern von anliegendem Strom-Minimalwert und Strom-Maximalwert in Abhängigkeit einer gewünschten, zu erreichenden Temperatur in dem mikrofluidischen Kanal bzw. Hohlraum eingestellt.

Eine über dem Widerstandsbauelement oder den Widerstandsbauelementen abfallende Spannung wird während eines Schritts 98 gemessen. Dazu wird typischerweise ein relativ geringer Strom, zum Beispiel der Strom-Minimalwert, verwendet. Auf der Basis der gemessenen Spannung wird eine tatsächliche Temperatur in dem mikrofluidischen Kanal gemessen, wie dargestellt in Schritt 99 des Verfahrens gemäß Fig. 9.

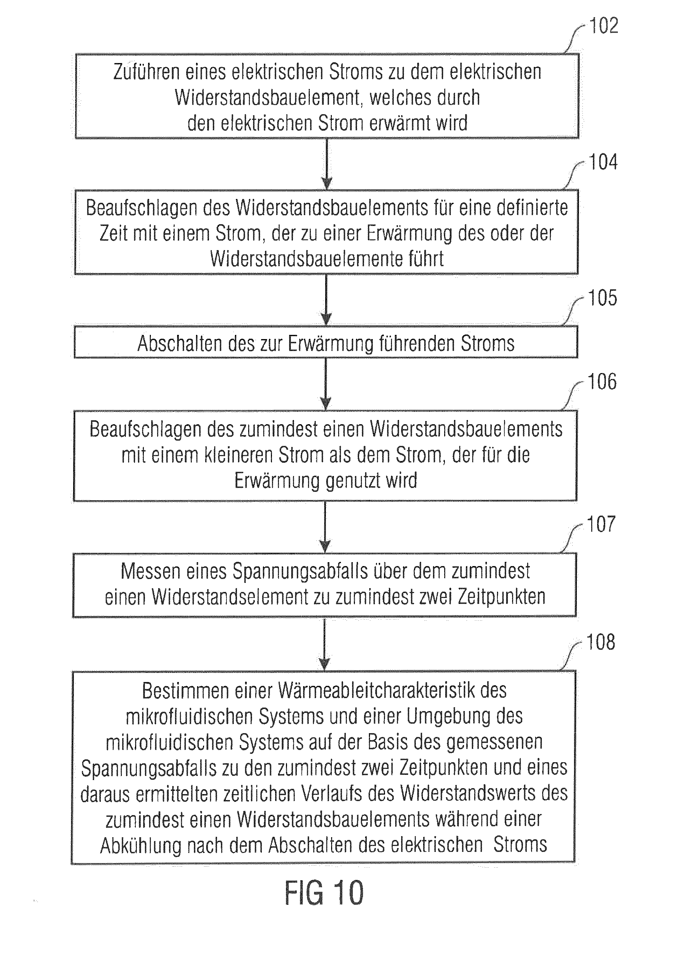

Fig. 10 ein schematisches Flussdiagramm eines Verfahrens zum Einstellen bzw. Erzielen einer erhöhten Temperatur in einem Kanal bzw. Hohlraum eines mikrofluidischen Systems gemäß zumindest einem Ausführungsbeispiel der offenbarten technischen Lehre. Während eines Schritts 102 wird ein elektrischer Strom zu dem elektrischen Widerstandsbauelement zugeführt, welches durch den eletkrischen Strom erwärmt wird. Das Widerstandsbauelement wird für eine bestimmte Zeit mit einem Strom beaufschlagt, der zu einer Erwärmung des oder der Widerstandsbauelement führt, wie gezeigt in Schritt 104.

In einem Schritt 105 wird der zur Erwärmung führende Strom abgeschaltet und während eines Schritts 106 wird das zumindest eine Widerstandsbauelement mit einem kleineren Strom beaufschlagt, als dem Strom, der für die Erwärmung genutzt wird. Ein Spannungsabfall über dem zumindest einen Widerstandsbauelement wird im Rahmen eines Schritts 107 zu zumindest zwei Zeitpunkten gemessen. Eine Veränderung des Spannungsabfalls zwischen einem ersten Zeitpunkt und einem zweiten Zeitpunkt erlaubt Rückschlüsse auf das Temperaturverhalten des mikrofluidischen Systems. Insbesondere kann während eines Schritts 108 eine Wärmeableitcharakteristik des mikrofluidischen Systems und einer Umgebung des mikrofluidischen Systems bestimmt werden. Die Bestimmung der Wärmeableitcharakteristik kann auf der Basis des gemessenen Spannungsabfalls zu den zumindest zwei Zeitpunkten und eines daraus ermittelten zeitlichen Verlaufs des Widerstandswerts des zumindest einen Widerstandsbauelements während einer Abkühlung nach dem Abschalten des zur Erwärmung führenden Stroms.

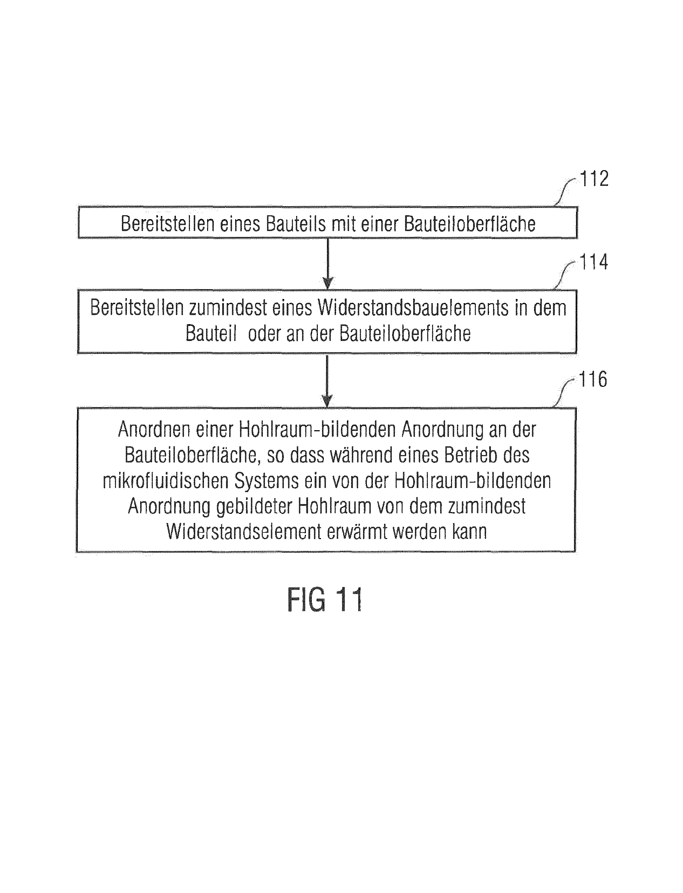

Fig. 11 ein schematisches Flussdiagramm eines Verfahrens zur Herstellung eines mikrofluidischen Systems gemäß zumindest einem Ausführungsbeispiel der offenbarten technischen Lehre. Während eines Schritts 112 wird ein Bauteil mit einer Bauteiloberfläche bereitgestellt. Dabei kann es sich um ein Elektrodensubstrat (z.B. eine Leiterplatte) handeln. Während eines Schritts 114 wird zumindest ein Widerstandsbauelement in dem Bauteil oder an der Bauteiloberfläche bereitgestellt. Eine Hohlraum-bildende Anordnung wird während eines Schritts 116 an der Bauteiloberfläche angeordnet, so dass während eines Betriebs des mikrofluidischen Systems ein von der Hohlraum-bildenden Anordnung gebildeter Hohlraum von dem zumindest einen Widerstandselement erwärmt werden kann.

Zusammenfassend ausgedrückt betrifft also die vorstehende Erfindung ein mikrofluidisches System, bestehend aus oder mit mindestens einem Substrat mit Elektroden (1), mindestens einem Fluidikteil (20) mit mindestens einem mikrofluidischen Kanal (30), wobei sich zwischen dem Fluidikteil (20) und dem Substrat mit Elektroden (1) mindestens ein elektrisches Widerstandsbauelement befindet, das mit den Elektroden (2a) auf dem mindestens einem Substrat (1) derart verbunden ist, dass ein elektrischer Strom über die Leitbahnen (2a) durch das Widerstandsbauelement (10) fließen kann. Die Erfindung betrifft desweiteren ein solches System, bei dem das oder die Widerstandsbauelemente einen negativen Temperaturkoeffizienten aufweisen.

Die Erfindung betrifft auch ein mikrofluidisches System, bestehend aus oder mit mindestens einem Substrat mit Elektroden (1), mindestens einem Fluidikteil (20) mit mindestens einem mikrofluidischen Kanal (30), wobei sich zwischen dem Fluidikteil (20) und dem Substrat mit Elektroden (1) mindestens ein elektrisches Widerstandsbauelement befindet, das mit den Elektroden (2a) auf dem mindestens einem Substrat (1) derart verbunden ist, dass ein elektrischer Strom über die Leitbahnen (2a) durch das Widerstandsbauelement (10) fließen kann. Die Erfindung betrifft des Weiteren ein solches System, bei dem das oder die Widerstandsbauelemente einen negativen Temperaturkoeffizienten aufweisen.

Die Erfindung betrifft darüber hinaus ein Verfahren zur Temperierung in einem mikrofluidischen System und zur In-Situ-Berücksichtigung der Wärmeableitung im mikrofluidischen System und in seiner Umgebung.

Die Erfindung betrifft darüber hinaus ein Verfahren zur Temperierung in einem mikrofluidischen System und zur In-Situ-Berücksichtigung der Wärmeableitung im mikrofluidischen System und in seiner Umgebung. Gemäß zumindest einem weiteren Ausführungsbeispiel wird ein mikrofluidisches System bereitgestellt, mit mindestens einem Substrat mit Elektroden (1), mindestens einem Fluidikteil (20) mit mindestens einem mikrofluidischen Kanal (30), wobei sich zwischen dem Fluidikteil (20) und dem Substrat mit Elektroden (1) mindestens ein elektrisches Widerstandsbauelement befindet, das mit den Elektroden (2a) auf dem mindestens einem Substrat (1) derart verbunden ist, dass ein elektrischer Strom über die Leitbahnen (2a) durch das Widerstandsbauelement (10) fließen kann.

Dabei kann der mindestens eine Kanal zumindest teilweise durch einen Deckel (22) verschlossen sein.

Dabei kann für das oder die Widerstandsbauelemente (10) eine Aussparung (11) in dem mindestens einen Fluidikteil vorgesehen sein.

Dabei kann sich in der Aussparung (11) zumindest teilweise ein Material (12) befinden, welches eine höhere Wärmeleitfähigkeit als Luft besitzt.

Dabei kann das gut wärmeleitende Material (12) eine zumindest im Ausgangszustand einen pastösen, gelartigen oder flüssigen Zustand besitzen.

Dabei kann sich im Substrat mit Elektroden (1) mindestens ein Loch befinden, über das wärmeleitendes Material durch das Substrat mit Elektroden (1) in einen die Widerstandsbauelemente (10) enthaltenden Raum (11) eingebracht werden kann.

Dabei kann das oder die Widerstandsbauelemente (10) einen elektrischen Widerstand mit negativem Temperaturkoeffizienten besitzen.

Dabei kann es sich bei dem oder den Widerstandsbauelementen (10) um Bauelemente für die Oberflächenmontage (engl.: Surface Mount Devices, SMD) Handeln.

Dabei kann das oder die Widerstandsbauelemente eine Höhe kleiner 1 mm aufweisen.

Dabei können die Seitenwände (21) des Kanals (30) zumindest teilweise durch ein strukturiertes Klebeband gebildet werden.

Dabei kann der Deckel (22) des Kanals (30) zumindest teilweise einen Sensor bilden, der Spezies aus einem Fluid im Kanal (30) detektieren kann.

Dabei kann der Sensor an mindestens einer Stelle immobilisierte Moleküle zur Detektion von anderen Molekülen aufweisen.

Dabei können sich auf dem Substrat mit Elektroden (1) weitere Elektroden (2b) befinden, die in Kontakt mit einem Elektrolyten (42) stehen.

Dabei kann es sich beim Elektrolyten (42) um einen wasserbasierten Elektrolyten handeln.

Dabei kann sich zwischen Elektrolyt (42) und fluidischem Teil 20 eine verformbare Membran (41) befinden, die sich in ein Reservoir 40 im mikrofluidischen Teil 20 verformen kann.

Dabei können die elektrischen Leitbahnen (2, 2a) auf dem Substrat (1), mit denen der Elektrolyt (42) und der oder die Widerstandsbauelemente (10) kontaktiert sind, von außen zugänglich sein.

Dabei können die elektrischen Leitbahnen (2, 2a) auf dem Substrat (1), mit denen der Elektrolyt (42) und der oder die Widerstandsbauelemente (10) kontaktiert sind, zumindest teilweise im Inneren des mikrofluidischen Systems mit einem integrierten elektrischen Schaltkreis verbunden sein.

Das zuvor beschriebene mikrofluidische System kann im Zusammenhang mit einem Verfahren bzw. einer Verfahrung zum Einstellen einer erhöhten Temperatur in zumindest einem Teil eines mikrofluidischen Kanals (30) in dem mikrofluidischen System verwendet werden. In dem mikrofluidischen System ist mindestens eines der Widerstandsbauelemente (10) mit je einer Stromquelle verbunden (oder mehrere Widerstandsbauelemente sind mit einer gemeinsamen Stromquelle verbunden). Das Verfahren umfasst folgenden Schritt: das mindestens eine Widerstandsbauelement wird durch einen Strom aus der Stromquelle erwärmt.

Dabei kann mindestens eine Reihenschaltung von mindestens zwei Widerstandsbauelementen (10) mit je einer Stromquelle verbunden sein und durch einen Strom aus dieser erwärmt werden.

Dabei kann die Stromquelle mit einem einstellbaren variablen Gleichstrom betrieben werden.

Dabei kann die Stromquelle einen zwischen mindestens einem Strom-Minimalwert und mindestens einem Strom-Maximalwert pulsierenden Strom ausgeben, wobei das Verhältnis der Zeiten von anliegendem Minimal- und Maximalwert einstellbar ist und zwischen Null und Unendlich liegen kann.

Dabei kann die Stromquelle oder können die Stromquellen ein Merkmal zum Messen der über dem oder die angeschlossenen Widerstandsbauelemente abfallenden Spannung aufweisen.

Dabei kann zumindest ein Widerstandsbauelement von der Stromquelle für eine definierte Zeit mit einem Strom beaufschlagt werden, der zu einer Erwärmung des oder der Widerstandsbauelemente um mindestens 1 Kelvin führt, wobei in mehreren Zeitabständen zumindest nach Ausschalten des zur Erwärmung führenden Stromes der Widerstand an dem oder den Widerstandsbauelementen durch Spannungsmessung unter Beaufschlagung mit einem kleineren als dem für die Erwärmung genutzten und damit nicht zu einer so starken Erwärmung führenden Strom gemessen werden kann, so dass mit Hilfe der Temperatur-Widerstandskennlinie des mindestens einen Widerstandsbauelements und mindestens einem Teil des zeitlichen Verlaufs des Widerstandes des oder der Widerstandsbauelemente während der Abkühlung die Wärme-Ableitcharakteristik des mikrofluidischen Systems und seiner Umgebung bestimmt werden kann.

Dabei kann die Widerstands-Messung während der Abkühlung in der Zeit des Anliegens des Strom-Minimalwertes durchgeführt werden.

Gemäß weiterer Aspekte kann ein mikrofluidisches System umfassen: zumindest ein Bauteil (1) mit zumindest einer Bauteiloberfläche; eine Hohlraum-bildende Anordnung (3), die angrenzend an die Bauteiloberfläche angeordnet ist und einen Hohlraum (30) zur Aufnahme eines Fluids umfasst; und ein elektrisches Widerstandsbauelement (10), das an der Bauteiloberfläche des zumindest einen Bauteils (1) angeordnet ist und ausgebildet ist, mit einem elektrischen Strom beaufschlagt zu werden, so dass das elektrische Widerstandsbauelement (10) das in dem Hohlraum (30) befindliche Fluid erwärmt.

Dabei kann die Hohlraum-bildende Anordnung (3) einen Abschnitt (20) umfasst, der den Hohlraum (30) von der Bauteiloberfläche separiert. Weiterhin kann der den Hohlraum (30) von der Bauteiloberfläche separierende Abschnitt (20) der Hohlraum-bildenden Anordnung (3) an einer der Bauteiloberfläche zugewandten Abschnittsoberfläche eine Aussparung (11) zur Aufnahme des elektrischen Widerstandsbauelements (10) aufweist. Zusätzlich ist auch denkbar, dass sich in der Aussparung (11) zumindest teilweise ein Material (12) befindet, welches eine höhere Wärmeleitfähigkeit als Luft besitzt.

Gemäß weiterer Aspekte, die sich auf ein wie zuvor beschriebenes mikrofluidisches System beziehen, kann alternativ oder zusätzlich das elektrische Widerstandsbauelement (10) einen elektrischen Widerstand mit negativem Temperaturkoeffizienten aufweisen.

Gemäß weiterer Aspekte, die sich auf ein wie zuvor beschriebenes mikrofluidisches System beziehen, kann alternativ oder zusätzlich die Hohlraum-bildende Anordnung (3) ein Bodenelement, ein Deckelelement (22) und ein zwischen dem Bodenelement und dem Deckelelement angeordnetes Hohlraum-strukturierendes Element (21) umfasst, wobei das Bodenelement an der Bauteiloberfläche des Bauteils (1) angeordnet ist. Dabei können gemäß einem speziellen Aspekt das Bodenelement, das Deckelelement (22) und das Hohlaum-strukturierende Element (21) eine Schichtanordnung bilden.

Gemäß weiterer Aspekte, die sich auf ein wie zuvor beschriebenes mikrofluidisches System beziehen, kann alternativ oder zusätzlich das elektrische Widerstandsbauelement (10) ein Bauelement für die Oberflächenmontage (surface mount device, SMD) sein.

Gemäß weiterer Aspekte, die sich auf ein wie zuvor beschriebenes mikrofluidisches System beziehen, kann dieses alternativ oder zusätzlich eine elektrische Leiterbahn umfassen, die zumindest teilweise an der Bauteiloberfläche angeordnet ist und ausgebildet ist, den elektrischen Strom für das elektrische Widerstandsbauelement (10) zu leiten.

Gemäß weiterer Aspekte, die sich auf ein wie zuvor beschriebenes mikrofluidisches System beziehen, kann dieses alternativ oder zusätzlich einen elektrolytischen, fluidischen Aktor umfassen, der ausgebildet ist, auf das Fluid in dem Hohlraum (30) einzuwirken.

Gemäß weiterer Aspekte, die sich auf ein wie zuvor beschriebenes mikrofluidisches System beziehen, kann dieses alternativ oder zusätzlich eine elektrische Stromquellenschaltung umfassen, die ausgebildet ist, das elektrische Widerstandselement mit dem elektrischen Strom zu versorgen. Dabei kann die elektrische Stromquellenschaltung ausgebildet ferner ausgebildet sein, den elektrischen Strom auf zumindest zwei Stromstärkewerten im Wesentlichen konstant zu halten, wobei eine erste, größere Stromstärke einem Heizbetrieb des elektrischen Widerstandsbauelement (10) zugeordnet ist und eine zweite, niedrigere Stromstärke einem Messbetrieb des elektrischen Widerstands zugeordnet ist zum Messen eines elektrischen Widerstandswerts des elektrischen Widerstandsbauelements (10).

Gemäß weiterer Aspekte, die sich auf ein wie zuvor beschriebenes mikrofluidisches System und insbesondere die erwähnte Stromquellenschaltung beziehen, kann das mikrofluidische System alternativ oder zusätzlich einen elektrolytischen, fluidischen Aktor und ein Schaltelement (50) umfassen. Das Schaltelement (50) kann ausgebildet sein, den von der elektrischen Stromquellenschaltung bereitgestellten elektrischen Strom in einem ersten Schaltzustand dem elektrischen Widerstandselement zuzuführen und in einem zweiten Schaltzustand dem elektrolytischen, fluidischen Aktor zuzuführen.

Gemäß weiterer Aspekte, die sich auf ein wie zuvor beschriebenes mikrofluidisches System beziehen, kann dieses alternativ oder zusätzlich eine Widerstandsmessvorrichtung (60) zum Messen eines Widerstandwerts des elektrischen Widerstandsbauelements (10) umfassen.

Gemäß weiterer Aspekte, die sich auf ein wie zuvor beschriebenes mikrofluidisches System beziehen, kann dieses alternativ oder zusätzlich umfassend ein weiteres Widerstandsbauelement (10) umfassen, das an der Bauteiloberfläche des zumindest einen Bauteils (1) angeordnet ist und mit dem Widerstandsbauelement (10) in Reihe geschaltet ist.

Gemäß weiterer Aspekte wird ein Verfahren zum Einstellen einer erhöhten Temperatur in zumindest einem Teil eines mikrofluidischen Kanals in einem mikrofluidischen System offenbart. Das mikrofluidische System umfasst ein Bauteil (1) mit zumindest einer Bauteiloberfläche; eine Hohlraum-bildende Anordnung (3), die angrenzend an die Bauteiloberfläche angeordnet ist und einen Hohlraum (30) zur Aufnahme eines Fluids umfasst; und ein elektrisches Widerstandsbauelement (10), das an der Bauteiloberfläche des zumindest einen Bauteils (1) angeordnet ist und ausgebildet ist, mit einem elektrischen Strom beaufschlagt zu werden, so dass das elektrische Widerstandsbauelement (10) das in dem Hohlraum (30) befindliche Fluid erwärmt, umfasst. Das Verfahren umfasst: Zuführen eines elektrischen Stroms zu dem elektrischen Widerstandsbauelement (10), welches durch den elektrischen Strom erwärmt wird.

Gemäß weiterer Aspekte, die sich auf ein wie zuvor beschriebenes Verfahren beziehen, kann dieses alternativ oder zusätzlich umfassen: Variieren einer elektrischen Stromstärke des elektrischen Stroms zwischen mindestens einem Strom-Minimalwert und mindestens einem Strom-Maximalwert; und Einstellen eines Verhältnisses von Zeitdauern von anliegendem Strom-Minimalwert und Strom-Maximalwert in Abhängigkeit einer gewünschten, zu erreichenden Temperatur in dem mikrofluidischen Kanal.

Gemäß weiterer Aspekte, die sich auf ein wie zuvor beschriebenes Verfahren beziehen, kann dieses alternativ oder zusätzlich umfassen: Messen einer über dem Widerstandsbauelement (10) oder über den Widerstandsbauelementen abfallenden Spannung; und Bestimmen einer tatsächlichen Temperatur in dem mikrofluidischen Kanal auf der Basis der gemessenen Spannung.

Gemäß weiterer Aspekte, die sich auf ein wie zuvor beschriebenes Verfahren beziehen, kann dieses alternativ oder zusätzlich umfassen: Beaufschlagen des Widerstandsbauelements (10) für eine definierte Zeit mit einem Strom, der zu einer Erwärmung des oder der Widerstandsbauelemente (10) führt; Abschalten des zur Erwärmung führenden Stroms; Beaufschlagen des zumindest einen Widerstandsbauelements (10) mit einem kleineren Strom als dem Strom, der für die Erwärmung genutzt wird; Messen eines Spannungsabfalls über dem zumindest einen Widerstandselement zu zumindest zwei Zeitpunkten; und Bestimmen einer Wärmeableitcharakteristik des mikrofluidischen Systems und einer Umgebung des mikrofluidischen Systems auf der Basis des gemessenen Spannungsabfalls zu den zumindest zwei Zeitpunkten und eines daraus ermittelten zeitlichen Verlaufs des Widerstandswerts des zumindest einen Widerstandselements während einer Abkühlung nach dem Abschalten des elektrischen Stroms. Als weitere Option kann die Messung des Widerstands während der Abkühlung durch Beaufschlagung des zumindest einen Widerstandselements mit einem relativ niedrigen Stromstärkewert erfolgen.

Gemäß weiterer Aspekte wird ein Verfahren zur Herstellung eines mikrofluidischen Systems offenbart. Dieses Verfahren umfasst: Bereitstellen eines Bauteils (1) mit einer Bauteiloberfläche; Bereitstellen zumindest eines Widerstandsbauelements (10) in dem Bauteil (1) oder an der Bauteiloberfläche; und Anordnen einer Hohlraum-bildenden Anordnung (3) an der Bauteiloberfläche, so dass während eines Betrieb des mikrofluidischen Systems ein von der Hohlraum-bildenden Anordnung (3) gebildeter Hohlraum (30) von dem zumindest Widerstandselement erwärmt werden kann.

Gemäß weiterer Aspekte, die sich auf ein wie zuvor beschriebenes Verfahren beziehen, kann das Anordnen der Hohlraum-bildenden Anordnung (3) zumindest ein Aufbringen einer ersten Schicht an der Bauteiloberfläche und ein Aufbringen einer zweiten Schicht auf die erste Schicht umfassen.

Gemäß weiterer Aspekte, die sich auf ein wie zuvor beschriebenes Verfahren beziehen, kann die Hohlraum-bildende Anordnung (3) an einer der Bauteiloberfläche zugewandten Oberfläche eine Aussparung (11) aufweisen, die beim Bereitstellen der Hohlraum-bildenden Anordnung (3) an der Bauteiloberfläche mit dem zumindest einen Widerstandselement zur Aufnahme des zumindest einen Widerstandselements ausgerichtet wird.

Gemäß weiterer Aspekte, die sich auf ein wie zuvor beschriebenes Verfahren beziehen, kann dieses alternativ oder zusätzlich ein Bereitstellen eines elektrolytischen, fluidischen Aktors an der Bauteiloberfläche zum Einwirken auf ein in dem Hohlraum (30) befindliches Fluid umfassen.

Gemäß weiterer Aspekte, die sich auf ein wie zuvor beschriebenes Verfahren beziehen, kann dieses alternativ oder zusätzlich das Füllen der in der Hohlraum-bildenden Anordnung (3) ausgebildeten Aufnahme für das zumindest eine Widerstandselement mit einem Material, welches eine höhere Wärmeleitfähigkeit als Luft aufweist, umfassen.

Gemäß weiterer Aspekte, die sich auf ein wie zuvor beschriebenes Verfahren beziehen, kann dieses alternativ oder zusätzlich umfassen: Bereitstellen von elektrischen Verbindungen, die in dem Bauteil (1), an der Bauteiloberfläche, einer entgegengesetzten Bauteiloberfläche oder an mehreren der genannten Orte angeordnet sind.

Gemäß weiterer Aspekte, die sich auf ein wie zuvor beschriebenes Verfahren beziehen, kann dieses alternativ oder zusätzlich umfassen: Bereitstellen einer Steuerung für daszumindest eine Widerstandselement und Bereitstellen von elektrischen Verbindungen zwischen der Steuerung und dem zumindest einen Widerstandselement.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Bezugszeichen (ausgenommen sind Bezugszeichen für Verfahrensschritte):
1) Elektrodensubstrat (z.B. Leiterplatte)
2a, 2b) Elektroden
3) Hohlraum-bildende Anordnung
4) fluidischer, elektrolytischer Aktor, z.B. Pumpe oder Ventil
8) Stromquelle
10) NTC Widerstände
11) Aussparung
12) gut wärmeleitendes Material (z.B. Wärmeleitpaste,-gel oder Flüssigkeit)
20) Mikrofluidisches Teil (mit mikrofluidischen Kanälen und/oder Reservoiren) (z.B. ein Spritzgussteil)
21) Seitenwände eines Kanals
22) Kanaldeckel oder Sensor
30) Mikrofluidikkanal, in dem die Temperierung gewünscht ist
40) mikrofluidisches Reservoir oder Kanal
41) verformbare Membran
42) Elektrolyt
50) Schaltelement
60) Messeinrichtung

## Patentansprüche

1. Mikrofluidisches System umfassend:
zumindest ein Bauteil (1) mit zumindest einer Bauteiloberfläche;
eine Hohlraum-bildende Anordnung (3), die angrenzend an die Bauteiloberfläche angeordnet ist und einen Hohlraum (30) zur Aufnahme eines Fluids umfasst;
ein elektrisches Widerstandsbauelement (10), das an der Bauteiloberfläche des zumindest einen Bauteils (1) angeordnet ist und ausgebildet ist, mit einem elektrischen Strom beaufschlagt zu werden, so dass das elektrische Widerstandsbauelement (10) das in dem Hohlraum (30) befindliche Fluid erwärmt, wobei das elektrische Widerstandsbauelement (10) einen elektrischen Widerstand mit negativem Temperaturkoeffizienten aufweist und konzipiert ist, als Temperatursensor zu fungieren.

2. Mikrofluidisches System nach Anspruch 1, wobei die Hohlraum-bildende Anordnung (3) einen Abschnitt (20) umfasst, der den Hohlraum (30) von der Bauteiloberfläche separiert und an einer der Bauteiloberfläche zugewandten Abschnittsoberfläche eine Aussparung (11) zur Aufnahme des elektrischen Widerstandsbauelements (10) aufweist.

3. Mikrofluidisches System gemäß einem der vorhergehenden Ansprüche, wobei die Hohlraum-bildende Anordnung (3) ein Bodenelement, ein Deckelelement (22) und ein zwischen dem Bodenelement und dem Deckelelement angeordnetes Hohlraum-strukturierendes Element (21) umfasst, wobei das Bodenelement an der Bauteiloberfläche des Bauteils (1) angeordnet ist.

4. Mikrofluidisches System gemäß Anspruch 3, wobei das Bodenelement, das Deckelelement (22) und das Hohlaum-strukturierende Element (21) eine Schichtanordnung bilden.

5. Mikrofluidisches System gemäß einem der vorhergehenden Ansprüche, weiter umfassend einen elektrolytischen, fluidischen Aktor, der ausgebildet ist, auf das Fluid in dem Hohlraum (30) einzuwirken.

6. Mikrofluidisches System gemäß einem der vorhergehenden Ansprüche, weiter umfassend eine elektrische Stromquellenschaltung, die ausgebildet ist, das elektrische Widerstandselement mit dem elektrischen Strom zu versorgen und den elektrischen Strom auf zumindest zwei Stromstärkewerten im Wesentlichen konstant zu halten, wobei eine erste, größere Stromstärke einem Heizbetrieb des elektrischen Widerstandsbauelement (10) zugeordnet ist und eine zweite, niedrigere Stromstärke einem Messbetrieb des elektrischen Widerstands zugeordnet ist zum Messen eines elektrischen Widerstandswerts des elektrischen Widerstandsbauelements (10).

7. Mikrofluidisches System gemäß einem der vorhergehenden Ansprüche, weiter umfassend
eine Widerstandsmessvorrichtung (60) zum Messen eines Widerstandwerts des elektrischen Widerstandsbauelements (10).

8. Verfahren zum Einstellen einer erhöhten Temperatur in zumindest einem Teil eines mikrofluidischen Kanals in einem mikrofluidischen System, das zumindest umfasst: ein Bauteil (1) mit zumindest einer Bauteiloberfläche; eine Hohlraum-bildende Anordnung (3), die angrenzend an die Bauteiloberfläche angeordnet ist und einen Hohlraum (30) zur Aufnahme eines Fluids umfasst; und ein elektrisches Widerstandsbauelement (10), das an der Bauteiloberfläche des zumindest einen Bauteils (1) angeordnet ist und ausgebildet ist, mit einem elektrischen Strom beaufschlagt zu werden, so dass das elektrische Widerstandsbauelement (10) das in dem Hohlraum (30) befindliche Fluid erwärmt, umfasst,
wobei das Verfahren umfasst:
Zuführen eines elektrischen Stroms zu dem elektrischen Widerstandsbauelement (10), welches durch den elektrischen Strom erwärmt wird;
Messen einer über dem Widerstandsbauelement (10) oder über den Widerstandsbauelementen abfallenden Spannung; und
Bestimmen einer tatsächlichen Temperatur in dem mikrofluidischen Kanal auf der Basis der gemessenen Spannung.

9. Verfahren gemäß Anspruch 8, weiterhin umfassend:
Variieren einer elektrischen Stromstärke des elektrischen Stroms zwischen mindestens einem Strom-Minimalwert und mindestens einem Strom-Maximalwert,
Einstellen eines Verhältnisses von Zeitdauern von anliegendem Strom-Minimalwert und Strom-Maximalwert in Abhängigkeit einer gewünschten, zu erreichenden Temperatur in dem mikrofluidischen Kanal.

10. Verfahren gemäß einem der Anspruch 8 oder 9, weiter umfassend:
Beaufschlagen des Widerstandsbauelements (10) für eine definierte Zeit mit einem Strom, der zu einer Erwärmung des oder der Widerstandsbauelemente (10) führt;
Abschalten des zur Erwärmung führenden Stroms;
Beaufschlagen des zumindest einen Widerstandsbauelements (10) mit einem kleineren Strom als dem Strom, der für die Erwärmung genutzt wird;
Messen eines Spannungsabfalls über dem zumindest einen Widerstandselement zu zumindest zwei Zeitpunkten; und
Bestimmen einer Wärmeableitcharakteristik des mikrofluidischen Systems und einer Umgebung des mikrofluidischen Systems auf der Basis des gemessenen Spannungsabfalls zu den zumindest zwei Zeitpunkten und eines daraus ermittelten zeitlichen Verlaufs des Widerstandswerts des zumindest einen Widerstandselements während einer Abkühlung nach dem Abschalten des elektrischen Stroms.

11. Verfahren nach Anspruch 10, wobei die Messung des Widerstands während der Abkühlung durch Beaufschlagung des zumindest einen Widerstandselements mit einem relativ niedrigen Stromstärkewert erfolgt.

12. Verfahren zur Herstellung eines mikrofluidischen Systems, das Verfahren umfassend:
Bereitstellen eines Bauteils (1) mit einer Bauteiloberfläche;
Bereitstellen zumindest eines Widerstandsbauelements (10) in dem Bauteil (1) oder an der Bauteiloberfläche, wobei das elektrische Widerstandsbauelement (10) einen elektrischen Widerstand mit negativem Temperaturkoeffizienten aufweist und konzipiert ist, als Heizelement und als Temperatursensor zu fungieren;
Anordnen einer Hohlraum-bildenden Anordnung (3) an der Bauteiloberfläche, so dass während eines Betrieb des mikrofluidischen Systems ein von der Hohlraum-bildenden Anordnung (3) gebildeter Hohlraum (30) von dem zumindest Widerstandselement erwärmt werden kann.

13. Verfahren gemäß Anspruch 12, wobei das Anordnen der Hohlraum-bildenden Anordnung (3) zumindest ein Aufbringen einer ersten Schicht an der Bauteiloberfläche und ein Aufbringen einer zweiten Schicht auf die erste Schicht umfasst.

14. Verfahren gemäß Anspruch 12 oder 13, weiter umfassend:
ein Bereitstellen eines elektrolytischen, fluidischen Aktors an der Bauteiloberfläche zum Einwirken auf ein in dem Hohlraum (30) befindliches Fluid.

15. Verfahren gemäß einem der Ansprüche 12 bis 14, weiter umfassend:
Bereitstellen einer Steuerung für das zumindest eine Widerstandselement; und
Bereitstellen von elektrischen Verbindungen zwischen der Steuerung und dem zumindest einen Widerstandselement.
